(19) Europäisches Patentamt
European Patent Office
Office européen des brevets

(11) Publication number: **0 139 009**
**A1**

(12) # EUROPEAN PATENT APPLICATION
published in accordance with Art. 158(3) EPC

(21) Application number: **84900755.4**

(22) Date of filing: **14.02.84**

Data of the international application taken as a basis:

(86) International application number:
**PCT/JP84/00044**

(87) International publication number:
**WO84/03243 (30.08.84 84/21)**

(51) Int. Cl.[4]: **B 23 Q 15/00**
**G 05 B 19/403**

(30) Priority: **17.02.83 JP 25186/83**

(43) Date of publication of application:
**02.05.85** ***Bulletin* 85/18**

(84) Designated Contracting States:
**DE FR GB**

(71) Applicant: **FANUC LTD**
**5-1, Asahigaoka 3-chome Hino-shi**
**Tokyo 191(JP)**

(72) *Inventor:* **KISHI, Hajimu**
**Hino Hirayamadai Jutaku 1104 6-7-8, Asahigaoka**
**Hino-shi Tokyo 191(JP)**

(72) Inventor: **SEKI, Masaki**
**3-15-2-406, Takaido-nishi Suginami-ku**
**Tokyo 168(JP)**

(74) Representative: **Billington, Lawrence Emlyn et al,**
**HASELTINE LAKE & CO Hazlitt House 28 Southampton**
**Buildings Chancery Lane**
**London WC2A 1AT(GB)**

(54) **METHOD OF DETERMINING TOOL PATH.**

(57) A tool path determination method is employed to determine a tool path (ES) from an approach point (Pa) to a start point (Ps) of a first machining path (PF). The method comprises: a first step of inputting data ($\ell_1$ $x_s$, $y_s$; a, $x_s$, $y_s$) specifying a predetermined tool path pattern from a plurality of tool path patterns and also specifying the approach point (Pa); a second step of calculating coordinates ($x_a$, $y_a$) of the position of the approach point ($P_a$) by employing an operational expression corresponding to the specified tool path pattern and the data specifying the approach point; and a third step of determining the tool path (ES) from the approach point (Pa) to the start point (Ps) of the machining path (PF), on the basis of the approach point and the specified path pattern.

FIG. 1 (A)

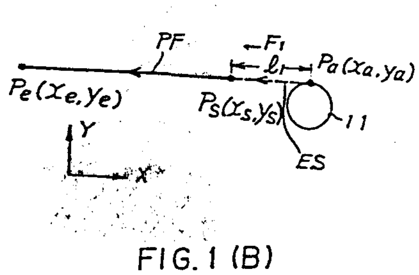


FIG. 1 (B)

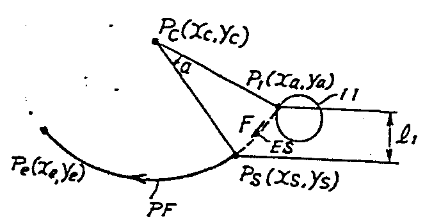


EP 0 139 009 A1

DESCRIPTION

# TOOL PATH DETERMINATION METHOD

## Technical Field

This invention relates to a tool path determination method and, more particularly, to a tool path determination method well-suited for use in determining a tool path from a point at which an approach is completed to a machining starting point, or from a point at which machining ends to a tool retraction starting point.

## Background Art

In a numerically controlled machine tool, a tool is made to approach a workpiece from a predetermined position (e.g., a reference point) and, upon completion of the approach, the tool is transported a short distance in a cutting feed mode from the approach completion point to a machining starting point. Thereafter, the tool is made to subject the workpiece to NC machining in accordance with a command. When the machining operation is completed, the tool is transported a short distance in the cutting feed mode from the machining completion point to a tool retraction starting point, after which the tool is retracted from the retraction starting point toward a predetermined position. The approach completion point or retraction starting point is decided so as to lie at a position somewhat removed from the workpiece upon taking into consideration such factors as excess

thickness of the workpiece, the tool path from the approach completion point to the machining starting point is determined in such a manner that the tool path is smoothly connected to the initial pass of the machining path for reasons of machining precision, and the tool path from the machining completion point to the retraction starting point is determined in such a manner that the path is smoothly connected to the final pass.

Accordingly, in the prior art, the NC data specifying the aforementioned tool paths are created by performing complex calculations while taking into consideration the shape of the initial or final pass of the machining path. The prior-art method therefore requires a considerable amount of time to create the NC data and does not readily lend itself to creation of NC data automatically.

An object of the present invention is to provide a tool path determination method through which a tool path from an approach completion point to a machining starting point, as well as a tool path from a machining completion point to a retraction starting point, can be determined simply and in a short period of time.

Another object of the present invention is to provide a tool path determination method through which a tool path from an approach completion point to a machining starting point can be smoothly connected to an initial machining pass.

Still another object of the present invention is to provide a tool path determination method through which a tool path from a machining completion point to a retraction starting point can be smoothly connected to a final machining pass.

A further object of the present invention is to provide a tool path determination method in which a machine-finished surface will not develop checkering or other flaws.

## Disclosure of the Invention

The present invention provides a tool path determination method which includes designating a prescribed pattern among a plurality of tool path patterns from an approach completion point to a machining starting point, or among a plurality of tool path patterns from a machining completion point to a tool retraction starting point, entering data necessary for specifying the approach completion point or tool retraction starting point, and determining a tool path from the approach completion point to the machining starting point, or from the machining completion point to the tool retraction starting point, by using the designated tool path pattern as well as the entered data. The invention enables a tool path to be determined merely by entering the prescribed tool path pattern and the data specifying the approach completion point or the tool retraction starting point.

## Brief Description of the Drawings

Figs. 1 through 3 are explanatory views illustrating various tool path patterns from an approach completion point to a machining starting point, in which Fig. 1 is an explanatory view for a case where a tool path (referred to as an "approach path") lies on an extension of an initial machining pass, Fig. 2 is an explanatory view for a case where an approach path lies on a tangent to an initial machining pass, and Fig. 3 is an explanatory view for a case where an approach path lies on a tangent circle to an initial machining pass; Figs. 4 through 6 are explanatory views illustrating various tool path patterns from a machining completion point to a tool retraction starting point, in which Fig. 4 is an explanatory view for a case where a tool path (referred to as a "retraction path") lies on an extension of a final machining pass, Fig. 5 is an explanatory view for a case where a retraction path lies on a tangent to a final machining pass, and Fig. 6 is an explanatory view for a case where a retraction path lies on a tangent circle to a final machining pass; Figs. 7 through 11 are explanatory views for describing NC data creation processing according to the present invention; Fig.12 is a block diagram of an embodiment in which the present invention is applied to the creation of NC data; Fig. 13 is a flowchart of processing for the same; and Fig. 14 is a block diagram for a case where the present invention is applied to numerical control.

Best Mode for Carrying Out the Invention

Figs. 1 through 3 are explanatory views illustrating various tool path patterns from an approach completion point to a machining starting point, in which (A) of each Figure illustrates a case where an initial pass of a machining path is a straight line, while (B) in each Figure illustrates a case where an initial pass of a machining path is a circular arc.

Figs. 1(A), (B) each illustrate a case where an approach completion point $P_a$ is decided so as to lie on an extension ES of an initial pass PF, a tool 11 is fed at a cutting rate $F_1$ from the approach completion point $P_a$ to an initial pass starting point Ps along the extension ES, after which cutting is performed along the initial pass PF up to an end point $P_e$.

Figs. 2(A), (B) each illustrate a case where an approach completion point $P_a$ is decided so as to lie on a tangent TS to an initial pass PF at the starting point $P_s$ thereof, the tool 11 is fed at a cutting rate $F_1$ from the approach completion point to an initial pass starting point Ps along the tangent TS, after which cutting is performed along the initial pass PF up to an end point $P_e$.

Figs. 3(A), (B) each illustrate a case where an approach completion point $P_a$ is decided so as to lie on a tangent circle TC to an initial pass PF at the starting point $P_s$ thereof, the tool 11 is fed at a cutting rate $F_1$ from the approach completion point to

an initial pass starting point Ps along the tangent circle TC, after which cutting is performed along the initial pass PF up to an end point $P_e$.

Figs. 4 through 6 are explanatory views illustrating various tool path patterns from a machining completion point to the tool retraction starting point, in which (A) of each Figure illustrates a case where a final pass of a machining path is a straight line, while (B) in each Figure illustrates a case where a final pass of a machining path is a circular arc.

Figs. 4(A), (B) each illustrate a case where the tool retraction starting point $P_a$ is decided so as to lie on an extension ES of a final pass PL, and the tool 11 is fed at a cutting rate $F_1$ from a machining end point $P_e$ to the tool retraction starting point Pa along the extension.

Figs. 5(A), (B) each illustrate a case where the tool retraction starting point $P_a$ is decided so as to lie on a tangent line TS to a final pass PL at the end point $P_e$ thereof, and the tool 11 is fed at a cutting rate $F_1$ from a machining end point $P_e$ to the tool retraction starting point Pa along the tangent TS.

Figs. 6(A), (B) each illustrate a case where the tool retraction starting point $P_a$ is decided so as to lie on a tangent circle TC to a final pass PL at the end point $P_e$ thereof, and the tool 11 is fed at a cutting rate $F_1$ from a machining end point $P_e$ to the

tool retraction starting point Pa along the tangent circle TC. It should be noted that the patterns in Figs. 1 and 4 correspond, with the sole difference between them being the travelling direction, which is either toward or away from the workpiece. The same holds for Figs. 2 and 5, and for Figs. 3 and 6.

In order to specify a tool path from an approach completion point to a machining starting point or from a machining end point to a tool retraction starting point in accordance with the present invention, data indicated by (A), (B) or (C) below are entered preceding or following NC data specifying a machining pass:

$TtL\ell_1Xx_sYy_sFf_1$ ; (A)

$TtAaXx_sYy_sFf_1$ ; (B)

$TtRrAaXx_sYy_sFf_1$ ; (C)

wherein the letter of the alphabet "T" is an address word for designating a predetermined pattern among the 12 patterns illustrated in Figs. 1(A), (B) through Figs. 6(A), (B). A total of 12 patterns shown in Figs. 1(A), (B), Figs. 2(A), (B), ... Figs. 6(A), (B) are designated by $T_1$, $T_2$, ... $T_{12}$, respectively. The letter of the alphabet "L" is an address word specifying a distance $\ell_1$ shown in Figs. 1 through 6, the letters of the alphabet "X", "Y" are address words specifying axial components $(x_s, y_s)$ of the starting point $P_s$ shown in Figs. 1 through 3, and axial components $(x_e, y_e)$ of the end point $P_e$ shown in Figs. 4

through 6, respectively, the letter of the alphabet "R" is an address word specifying a radius r of the tangential circle shown in Figs. 3 through 6, the letter of the alphabet "A" is an address word indicating an angle a shown in Figs. 4 and 6, and the letter of the alphabet "F" is an address word for designating feedrate.

The data (A), (B) or (C) mentioned above, as well as NC data specifying the initial pass or final pass of a machining path, are used to calculate the positional coordinates of an approach completion point or tool retraction starting point, as well as data specifying a tool path (approach path) from the approach completion point to the machining starting point, or a tool path (retraction path) from a machining completion point to the tool retraction starting point.

Thereafter, if NC data specifying the approach path and retraction path are created by using the aforementioned calculated data, and if the data indicated by (A), (B) or (C) is substituted for the created NC data, then NC data having an ordinary format will be created. It should be noted that an arrangement is possible wherein the data indicated by (A), (B), (C) is applied directly to an NC apparatus, ordinary NC data are created within the NC apparatus, and NC processing is performed using the NC data created.

Next, for each of the patterns shown in Figs. 1

through 6, there will be described the creation of NC data specifying tool paths (approach paths and retraction paths) for cases where the data (A), (B) or (C) are given.

(1) In this case, the given data specifying the tool path shown in Fig. 1(A) will be $TlL\ell_1Xx_sYy_sFf_1$ ; (see Fig. 7).

If we let the angle at which the initial machining pass PF intersects the X axis be θ, we may derive the following equations by using the starting and end point coordinates of the machining pass PF:

$$\cos\theta = |x_e - x_s| / \sqrt{(x_e - x_s)^2 + (y_s - y_e)^2} \quad (1)$$

$$\sin\theta = |x_e - x_s| / \sqrt{(x_e - x_s)^2 + (y_s - y_e)^2} \quad (2)$$

Therefore, the coordinate values $(x_a, y_a)$ of the approach completion point $P_a$ are as follows:

$$x_a = x_s + \ell_1 \cos\theta \quad (3)$$

$$y_a = y_s - \ell_1 \sin\theta \quad (4)$$

and the NC data take on the following form:

$$\left.\begin{array}{l} G00\ Xx_aYy_a\ ; \\ G01\ Xx_xYy_xFf_1\ ; \end{array}\right\} \quad (D)$$

In the first block, "G00" is a G-function instruction for positioning, with movement from a reference point to the approach completion point $P_a$ being designated by the first block. In the second block, "G01" is a G-function instruction for linear cutting, with movement from the approach completion point $P_a$ to a machining starting point $P_s$ at a rate $f_1$ being designated by the second block. The foregoing is for a

case where the distance $\ell_1$ is given. If the axial components $(x_1, y_1)$ from the starting point $P_s$ to the approach completion point $P_a$ are given, then we will have the following:

$$x_a = x_s + x_1$$
$$y_a = y_s + y_1$$

(2) In this case, the given data specifying the tool path shown in Fig. 1(B) will be $T2AaXx_sYy_sFf_1$ ; (see Fig. 8).

NC data indicative of the first machining pass PF, which is a circular arc, are given in the form:

$$Xx_eYy_eI\text{-}iJj \ ;$$

It should be noted that $(x_e, y_e)$ are the coordinate values of the end point $P_e$, and $(-i, j)$ are incremental values from the starting point $P_s$ of the circular arc to the center $P_c$ of the circular arc. Therefore, letting r be the radius of the circular arc, we have:

$$\left.\begin{aligned} i &= r\cdot\sin\varphi \\ j &= r\cdot\cos\varphi \end{aligned}\right\} \qquad (5)$$

The coordinates $(x_c, y_c)$ of the center $P_c$ of the arc are as follows:

$$\left.\begin{aligned} x_c &= x_s - i \\ y_c &= y_s - j \end{aligned}\right\} \qquad (6)$$

If Eqs. (5), (6) are used, the coordinate values $(x_a, y_a)$ of the approach completion point $P_a$ will be represented by the following:

$$\begin{aligned} x_a &= x_c + r\sin(a+\varphi) \\ &= x_c + r\cdot\sin a\cdot\cos\varphi + r\cos a\cdot\sin\varphi \end{aligned}$$

0139009

$$= x_c + j \cdot \sin a + i \cdot \cos a \qquad (7)$$

$$y_a = y_c - r\cos(a+\varphi)$$

$$= y_c - r\cos a \cdot \cos\varphi + r\sin a \cdot \sin\varphi$$

$$= y_c - j \cdot \cos a + i \cdot \sin a \qquad (8)$$

Accordingly, the NC data takes on the form:

$$\left.\begin{array}{l} G00Xx_aYy_a \\ G02Xx_sYy_sI(x_c-x_a)J(y_c-y_a)Ff_1\ ; \end{array}\right\} \qquad (E)$$

In the second block, "G02" is a G-function instruction for circular cutting in the clockwise direction. Tool movement from a reference point to the approach completion point is designated by the first block. Movement at a rate $f_1$ along the circular arc from the approach completion point $P_a$ to the machining starting point $P_s$ is designated by the second block.

(3) In a case where the given data specifying the tool path shown in Fig. 2(A) are $T3\ell_1Xx_sYy_sFf_1$ ;, NC data are created exactly as in case (1).

(4) In this case, the given data specifying the tool path shown in Fig. 2(B) will be $T4\ell_1Xx_sYy_sFf_1$ ; (see Fig. 9).

NC data indicative of the first machining pass PF, which is a circular arc, are given in the form:

$Xx_eYy_eI{-}iJj$ ;

with reference being had to Fig. 9. It should be noted that $(x_e, y_e)$ are the coordinate values of the end point $P_e$, and $(-i, j)$ are incremental values from the starting point $P_s$ of the circular arc to the center $P_c$ of the circular arc. The slope $m_1$ of a straight line LN is

expressed by the following, using i, j:

$$m_1 = \frac{j}{-i} \qquad (9)$$

Accordingly, the slope $m_2$ of the tangent TS to the first machining pass PF at the starting point $P_s$ thereof is found in the following manner. Specifically, since the tangent TS intersects the straight line LN, we have:

$$m_1 \cdot m_2 = -1 \qquad (10)$$

from which we may derive the following:

$$m_2 = \frac{i}{j} \qquad (11)$$

Therefore, if we let the angle at which the tangent TS intersects the X axis be θ, then we may write:

$$\left.\begin{aligned} \cos\theta &= j/\sqrt{i^2+j^2} \\ \sin\theta &= i/\sqrt{i^2+j^2} \end{aligned}\right\} \qquad (12)$$

so that the coordinate values $x_a$, $y_a$ of the approach completion point $P_a$ along the respective axes take on the following form:

$$\begin{aligned} x_a &= x_s + \ell_1 \cdot \cos\theta \\ &= x_s + \ell_1 \cdot j/\sqrt{i^2+j^2} \qquad (13) \end{aligned}$$

$$\begin{aligned} y_a &= y_s + \ell_1 \cdot \sin\theta \\ &= y_s + \ell_1 \cdot i/\sqrt{i^2+j^2} \qquad (14) \end{aligned}$$

Accordingly, the NC data take on the following form:

$$\left.\begin{aligned} &G00Xx_aYy_a\ ; \\ &G01Xx_sYy_s\ ; \end{aligned}\right\} \qquad (F)$$

(5) In this case, the given data specifying the

tool path shown in Fig. 3(A) will be $T5RrAaXx_sYy_sFf_1$ ; (see Fig. 10).

The slope $m_1$ of the machining pass PF is given by the following, using the starting and end point coordinates of the first machining pass PF, which is a straight line:

$$m_1 = (y_s-y_e)/(x_s-x_e) \qquad (15)$$

The slope $m_2$ of a straight line LN, which connects the starting point $P_s$ of the machining pass PF and the center $P_c'$ $(x_c', y_c')$ of a tangent circle TC contacting the machining pass PF at the starting point $P_s$, is given by the following equation owing to the fact that the straight line LC intersects the machining pass PF orthogonally:

$$m_2 = -\frac{1}{m_1} = -(x_s-x_e)/y_s-y_e) \qquad (16)$$

Therefore, if we let the angle defined by the straight line LN and the X axis be θ, we may derive the following:

$$\left.\begin{aligned} \cos\theta &= |y_s-y_e|/\sqrt{(x_s-x_e)^2+(y_s-y_e)^2} \\ \sin\theta &= |x_s-x_e|/\sqrt{(x_s-x_e)^2+(y_s-y_e)^2} \end{aligned}\right\} \qquad (17)$$

The coordinate values $x_c'$, $y_c'$ of the center $P_c'$ of the tangent circle TC are as follows:

$$\left.\begin{aligned} x_c' &= x_s - r\cdot\cos\theta \\ y_c' &= y_s - r\cdot\sin\theta \end{aligned}\right\} \qquad (18)$$

The coordinate values of the approach completion point $P_a$ are as follows:

$$x_a = x_c' + r\cdot\cos(\theta-a)$$

$$= x_s - r\cdot\cos\theta\cdot[1-\cos a] + r\cdot\sin\theta\cdot\sin a \quad (19)$$

$$y_a = y_c' + r\cdot\sin(\theta-a)$$

$$= y_s - r\cdot\sin\theta\cdot[1-\cos a] + r\cdot\cos\theta\cdot\sin a \quad (20)$$

Accordingly, the NC data take on the form:

$G00Xx_aYy_a$ ;

$G03Xx_sYy_sIi'Jj'Ff_1$ (G)

wherein:

$$i' = x_c' - x_a$$

$$= -r\cdot\cos(\theta-a)$$

$$= -r[\cos\theta\cdot\cos a + \sin\theta\cdot\sin a] \quad (21)$$

$$j' = y_c' - y_a$$

$$= r\cdot\sin(\theta-a)$$

$$= r[\sin\theta\cdot\cos a + \cos\theta\cdot\sin a] \quad (22)$$

"G03" is a G-function instruction signifying circular arc cutting in the counter-clockwise direction.

(6) In this case, the given data specifying the tool path shown in Fig. 3(B) will be $T6RrAaXx_sYy_sFf_1$ ; (see Fig. 11).

Since the NC data indicative of the first machining pass PF, which is a circular arc, are given as $Xx_eYy_eIiJi$ ;, the slope m of a straight line LN connecting the starting point $P_s$ $(x_s,y_s)$ and the center $P_c'$ $(x_c',y_c')$ of the tangent circle TC is expressed as follows, using i, j:

$$m = \frac{j}{i} \quad (23)$$

Therefore, if we let the angle defined by the straight line LN and the X axis be θ, we may derive the

following equations:

$$\left.\begin{aligned}\cos\theta &= i/\sqrt{i^2+j^2}\\ \sin\theta &= j/\sqrt{i^2+j^2}\end{aligned}\right\} \quad (24)$$

The coordinate values ($x_c'$,$y_c'$) of the center $P_c'$ of the tangent circle TC are expressed by the set of Eqs. (18) [where cosθ, sinθ are given by Eq. (24). The coorinate values $x_a$, $y_a$ of the approach completion point $P_a$ along the respective axes are expressed by Eqs. (19), (20), respectively. The NC data take on the following form:

$$\left.\begin{aligned}&G00Xx_aYy_a\ ;\\ &G03Xx_sYy_sIi'Jj'Ff_1\ ;\end{aligned}\right\} \quad (H)$$

wherein i', j' are given by Eqs. (21), (22), respectively.

The creation of NC data indicative of tool paths (approach paths) from the approach completion point $P_a$ to the starting point $P_s$ of the first machining pass PF have been described in connection with (1) through (6) above. The method is substantially the same for the creation of NC data indicative of the retraction tool paths of Figs. 4(A), (B) through Figs. 6(A), (B), with the only difference being the tool travelling direction. As an example, in order to specify the retraction path shown in Fig. 4(A), the following data are given:

$T7L\ell_1Xx_eYy_eFf_1$ ;

Accordingly, if $x_e$, $y_e$ are substituted for $x_s$, $y_s$ and $x_s$, $y_s$ are substituted for $x_e$, $y_e$ in Eqs. (1) through

(4), then the coordinate values $(x_a, y_a)$ of the retraction starting point $P_a$ may be found from Eqs. (1) through (4), so that the NC data indicative of the retraction path take on the form:

G01 $Xx_a$ $Yy_a$ $Ff_1$ ;

G00 $Xx_r$ $Yy_r$ $Zz_r$ ;

wherein $(x_r, y_r, z_r)$ are the coordinate values of the reference point.

In general, therefore, the creation of NC data indicative of a retraction path entails substituting $x_e$, $y_e$ for $x_s$, $y_s$ in Eqs. (1) through (24), and substituting the starting point coordinates $x_s$, $y_s$ of the final pass for $x_e$, $y_e$ in Eqs. (1) through (24). Then, the coordinate values of the retraction starting point $P_a$ are found from Eqs. (1) through (24). This is followed by creating NC data for moving the tool from the machining completion point $P_e$ to the tool retraction starting point $P_a$ at the rate $f_1$, and NC data from moving the tool from the tool retraction starting point $P_a$ to the reference point in the rapid traverse mode.

Fig. 12 is a block diagram of an embodiment for a case where the present invention is applied to an NC data creation apparatus, and Fig. 13 is a flowchart of the associated processing. The first step is to successively enter the data necessary to create NC data for a machining tool path. The data are entered from a data input unit 101 (such as a keyboard or display).

Machining path NC data are created under the control of a control program stored in a ROM 102, and the data are stored in a RAM 103. When the creation of the machining path NC data is completed, data specifying an approach path from an approach completion point to a machining starting point are entered from the data input unit 101 using the format indicated by (A), (B) or (C) shown above.

When the format data indicated by (A), (B) or (C) are entered, a processor 104, which is placed under the control of the control program, discriminates the approach path pattern (which decision is rendered based on the numerical value following the letter of the alphabet "T") and, on the basis of the approach path pattern, executes prescribed calculations from among Eqs. (1) through (24) to create the NC data for the approach.

When the creation of the NC data for the approach is completed, the processor 104 arrays the data just ahead of the NC data for the machining path.

Thereafter, data specifying a retraction path from a machining completion point to a retraction starting point are entered from the data input unit 101, using the format indicated by (A), (B) or (C) above.

When the format data have been entered, the processor 104 creates NC data indicative of the approach path and, through similar processing, NC data for the retraction path.

The processor 104 then arrays the retraction path NC data at the end of the machining path data, thereby completing the creation of all NC data. All NC data are stored in the RAM 103.

Finally, all created NC data are delivered as an output to an external storage medium via a tape puncher 105 or magnetic tape unit 106. This signifies the end of processing.

Fig. 14 is a block diagram of an embodiment for case where the tool path determination method of the present invention is applied to a numerical control apparatus. An NC tape 201 stores machining program data. The machining program data comprises the approach path data indicated by (A) through (C) above, NC data specifying a machining path, and the retraction path data indicated by (A) through (C). It should be noted, however, that a letter of the alphabet, e.g., "P", replaces the letter of the alphabet "T" in the format data (A) through (C).

When operation is started by an operator's panel 202, a numerical control unit 203 causes an NC tape reader 204 to reach one block of NC data and stores the NC data in an input memory 205.

Next, the numerical control unit 203 decodes the NC data stored in the input memory 205 and checks whether the letter of the alphabet "P" is contained in the NC data.

If the letter of the alphabet "P" is not contained

in the NC data and the NC data are indicative of an auxiliary function instruction, tool change instruction or spindle rotation instruction to be delivered to the machine side, thenthe numerical control unit 203 applies the instruction to a machine tool 207 through a magnetics circuit 206.

If the letter of of the alphabet "P" is not contained in the NC data and the NC data are path data, the numerical control unit 203 executes path processing, described below.

If the letter of the alphabet "P" is contained in the NC data, then the numerical control unit 203 applies a point calculation start command to an approach/retraction path calculating unit 208.

If the read NC data are path data, the numerical control unit 203 executes path control, which will now be described with regard to a straight line. The numerical control unit 203 obtains incremental values $X_i$, $Y_i$, $Z_i$ along the respective axes based on a target position ($X_e$, $Y_e$, $Z_e$) stored in the input memory 205, and a current position ($X_a$, $Y_a$, $Z_a$) stored in a memory 209. Next, based on the incremental values and a commanded feedrate F, the numerical control unit obtained velocity components $F_x$, $F_y$, $F_z$ along the respective axes from the following equations:

$$F_x = X_i \cdot F/\sqrt{X_i^2 + Y_i^2 + Z_i^2}$$
$$F_y = Y_i \cdot F/\sqrt{X_i^2 + Y_i^2 + Z_i^2}$$
$$F_z = Z_i \cdot F/\sqrt{X_i^2 + Y_i^2 + Z_i^2}$$

This is followed by obtaining, from the following equations, travelling distances $\Delta X$, $\Delta Y$, $\Delta Z$ to be traversed along the respective axes during a predetermined time interval $\Delta T$ sec. (= 8 msec.).

$$\Delta X = F_x \cdot \Delta T$$
$$\Delta Y = F_y \cdot \Delta T$$
$$\Delta Z = F_z \cdot \Delta T$$

These travelling distances $\Delta X$, $\Delta Y$, $\Delta Z$ are delivered to a pulse distributor 210 regularly at the time interval $\Delta T$. On the basis of the input data ($\Delta X$, $\Delta Y$, $\Delta Z$), the pulse distributor 210 performs a pulse distribution computation simultaneously along the three axes to generate distributed pulses $X_p$, $Y_p$, $Z_p$. Theses pulses are applied to respective servo circuits 211X, 211Y, 211Z for the respective axes, thus to rotate servomotors 212X, 212Y, 212Z. The tool is thus moved, relative to the workpiece, toward the target position.

The numerical control unit 203, in accordance with the following expressions, updates the current positions $X_a$, $Y_a$, $Z_a$ along the respective axes regularly at the time interval $\Delta T$ sec, which positions have been stored in the memory 209:

$$X_a \pm \Delta X \longrightarrow X_a$$
$$Y_a \pm \Delta Y \longrightarrow Y_a$$
$$Z_a \pm \Delta Z \longrightarrow Z_a$$

The sign depends upon the direction of movement. Similarly, in accordance with the following formulae, the numerical control unit 203 updates remaining

travelling distances $X_r$, $Y_r$, $Z_r$ (the initial values whereof are the incremental values $X_i$, $Y_i$, $Z_i$, respectively) every $\Delta T$ sec, these travelling distances having been stored in the memory 209:

$$X_r - \Delta X \longrightarrow X_r$$
$$Y_r - \Delta Y \longrightarrow Y_r$$
$$Z_r - \Delta Z \longrightarrow Z_r$$

When the following condition is established:

$$X_r = Y_r = Z_r = 0$$

the numerical control unit 203 causes the NC data reader 204 to read in the next item of NC data.

If the letter of the alphabet "P" is contained in the read NC data, the numerical control unit 203 causes the NC data reader 204 to read the NC data of the initial pass, stores the data in the input memory 205, and applies a computation start command CSI to the approach/retraction path calculating unit 208.

When the calculation start command CSI arrives, the approach/retraction path calculating unit 208 checks the numerical value following the letter of the alphabet "P", which numerical value has been stored in the input memory 205, identifies the path pattern specified by the input data, calculates data specifying the approach completion point and approach path, as well as data specifying the retraction starting point and retraction path, and applies the results of the computations to the numerical control unit 203. These computations are performed using prescribed arithmetic

expressions among the Eqs. (1) through (24), the formula depending upon the aforementioned identifying operation.

When the results of the computations arrive from the approach/retraction path calculating unit 208, the numerical control unit 203 obtains incremental values along the respective axes. If the path is an approach path, these values are found by using positional data indicative of the approach completion point contained in the results of the computations, as well as current position data ($X_a$, $Y_a$, $Z_a$) stored in the memory 209. Thereafter, the above-described path processing is executed using a rapid-traverse rate $F_o$ (already known) and the aforementioned incremental values, thus to move the tool to the approach completion point in the rapid-traverse mode.

Next, the numerical control unit 203 performs path processing using the data specifying the approach path, and positions the tool at the starting point of the initial pass at the cutting rate $f_1$. If the approach path is a straight line, path processing is performed as described above. If the approach path is a circular arc, then circular arc path processing is performed.

When the tool arrives at the starting point of the machining pass by means of the foregoing processing, the numerical control unit repeats the above-described processing using the NC data indicative of the initial machining pass. These data have already been read and

stored in the input memory 205. It should be noted that the processing for a retraction path is similar to that for the approach path.

The present invention as described in detail above is not limited to the embodiment but can be modified in various ways within the scope of the claims. As an example, the data formats are not limited to (A) through (C), for a vector (components along the respective axes) can be given instead of the distance $\ell_1$, and an angle $\ell_1$ can be given instead of the angle a with regard to the patterns shown in Fig. 3. It should be noted that the tool mentioned in the foregoing description is assumed to cover the wire electrode used in a wire-cut electric discharge machine.

Industrial Applicability

According to the present invention, merely entering simple data enables the creation of NC data for smoothly connecting an approach path to an initial machining pass, as well as data for smoothly connecting a retraction path to a final machining pass. Since the arrangement is such that a tool path can be smoothly connected to an initial or final machining pass, excellent NC machining can be performed without a finished surface developing checkering or the like. The present invention is therefore well-suited for application to an NC data creation apparatus or NC apparatus.

CLAIMS:

1. A tool path determination method for determining a tool path from an approach completion point to a starting point of an initial machining pass, characterized by having a first step of designating a prescribed tool path pattern from a plurality of tool path patterns and entering data specifying said approach completion point, a second step of calculating positional coordinates of the approach completion point by using arithmetic formulae corresponding to the designated tool path pattern, as well as said data, and a third step of determining a tool path from the approach completion point to the starting point of said machining pass on the basis of said approach completion point and said designated path pattern.

2. A tool path determination method according to claim 1, characterized in that said third step determines the tool path by creating numerical control data from the approach completion point to the starting point of the machining pass by using the positional coordinates of the approach completion point, positional coordinates of the starting point of said machining pass, and said designated path pattern.

3. A tool path determination method according to claim 2, characterized in that said plurality of path patterns are a first pattern for moving a tool along an extension of said initial machining pass, a second pattern for moving the tool along a tangent to the

initial machining pass at the starting point thereof, and a third pattern for moving the tool along a tangent circle to the initial machining pass at the starting point thereof.

4. A tool path determination method according to claim 3, characterized in that said plurality of path patterns are said first, second and third patterns in a case where the initial machining pass is a straight line, and in a case where the initial machining pass is a circular arc.

5. A tool path determination method according to claim 4, characterized in that said arithmetic formulae are stored in correlation with respective ones of said path patterns.

6. A tool path determination method for determining a tool path from an end point of a final machining pass to a tool retraction starting point, characterized by having a first step of designating a prescribed tool path pattern among a plurality of tool path patterns and entering data specifying said tool retraction starting point, a second step of calculating positional coordinates of the tool retraction starting point by using arithmetic formulae corresponding to the designated tool path pattern, as well as said data, and a third step of determining a tool path from the end point of said machining pass to said tool retraction starting point on the basis of said tool retraction starting point and said designated path pattern.

7. A tool path determination method according to claim 6, characterized in that said third step determines the tool path by creating numerical control data from the end point of said machining pass to the tool retraction starting point of the machining pass by using the positional coordinates of the tool retraction starting point, positional coordinates of the end point of said machining pass, and said designated path pattern.

8. A tool path determination method according to claim 7, characterized in that said plurality of path patterns are a pattern for moving a tool along an extension of said final machining pass, a second pattern for moving the tool along a tangent to the final machining pass at the end point thereof, and a third pattern for moving the tool along a tangent circle to the final machining pass at the end point thereof.

9. A tool path determination method according to claim 8, characterized in that said plurality of path patterns are said first, second and third patterns in a case where the final machining pass is a straight line, and in a case where the final machining pass is a circular arc.

10. A tool path determination method according to claim 9, characterized in that said arithmetic formulae are stored in correlation with respective ones of said path patterns.

FIG. 1 (A)

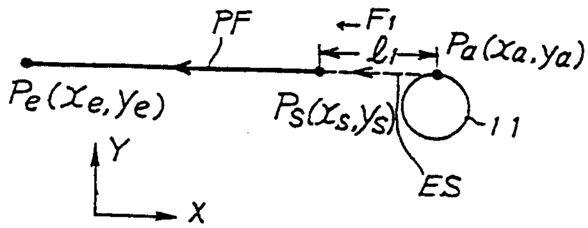


FIG. 1 (B)

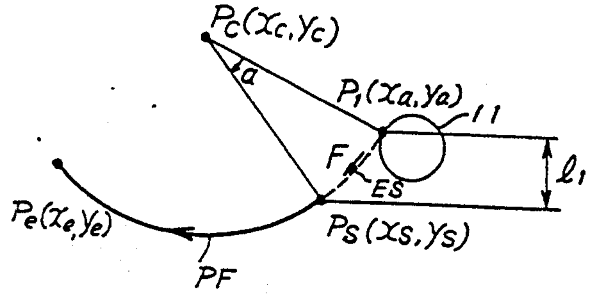


FIG. 2 (A)

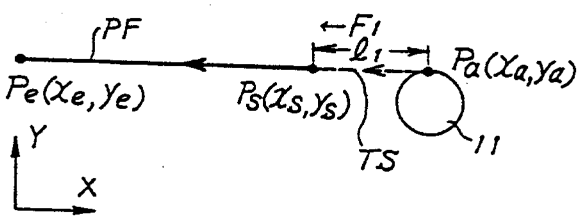


FIG. 2 (B)

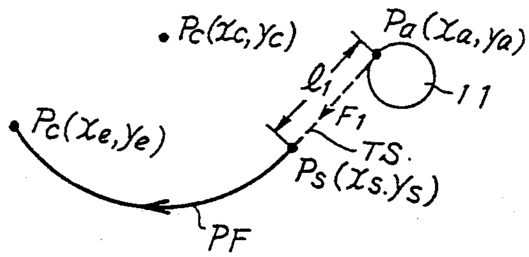


FIG. 3 (A)

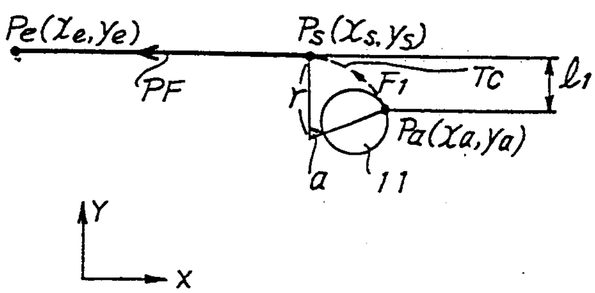


FIG. 3 (B)

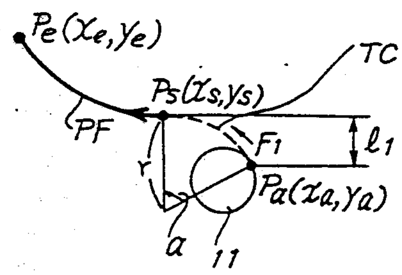

FIG. 4(A)

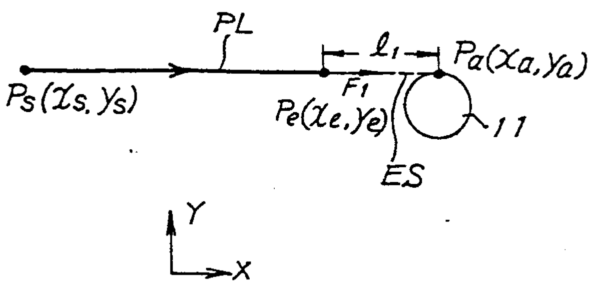


FIG. 4(B)

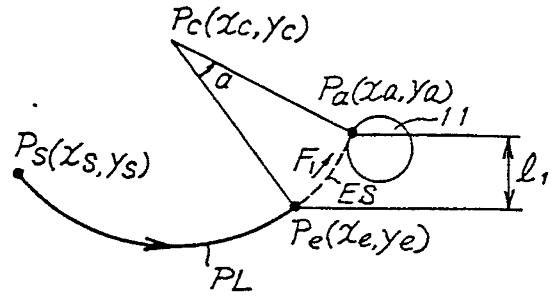


FIG. 5(A)

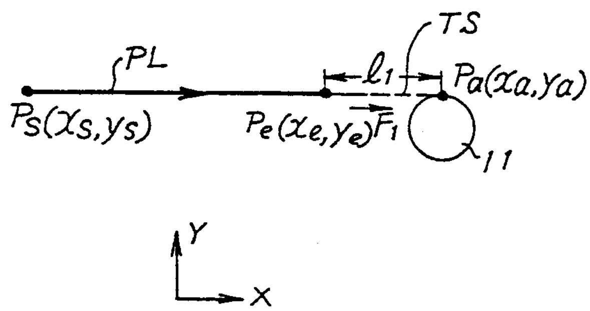


FIG. 5(B)

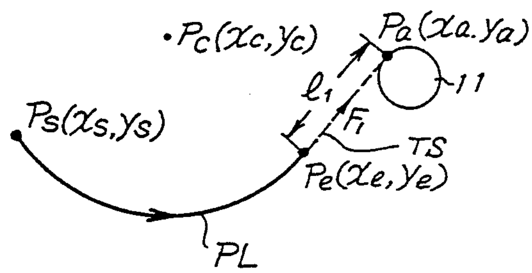


FIG. 6(A)

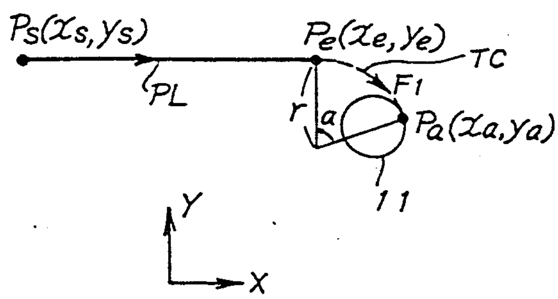


FIG. 6(B)

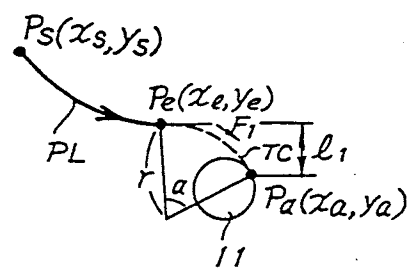

FIG. 7

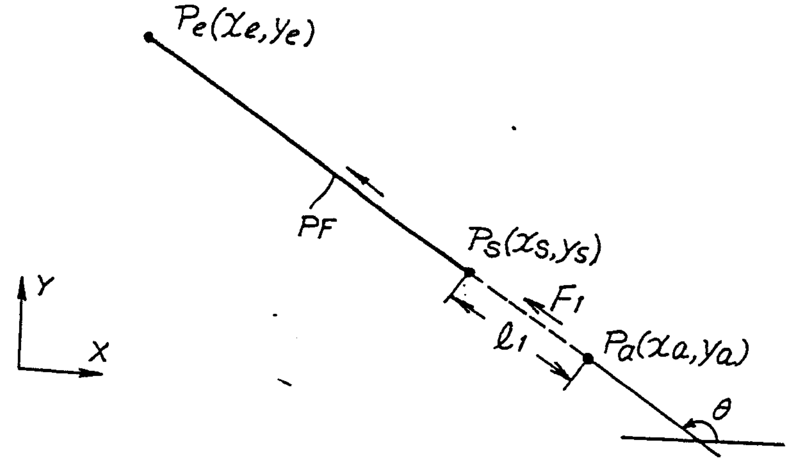


FIG. 8

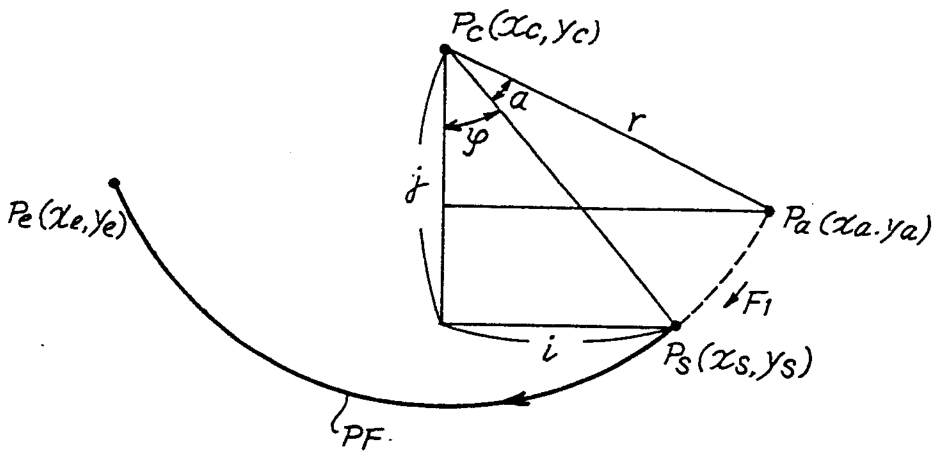


FIG. 9

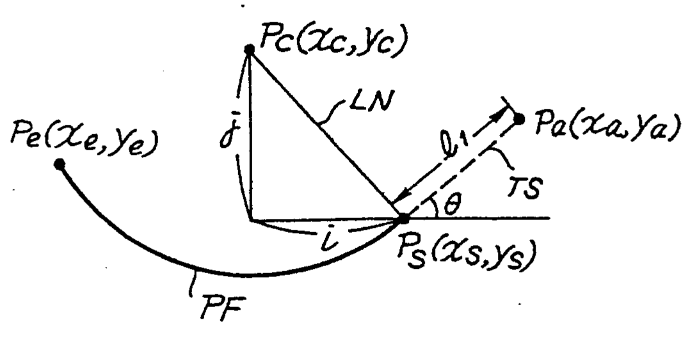

FIG. 10

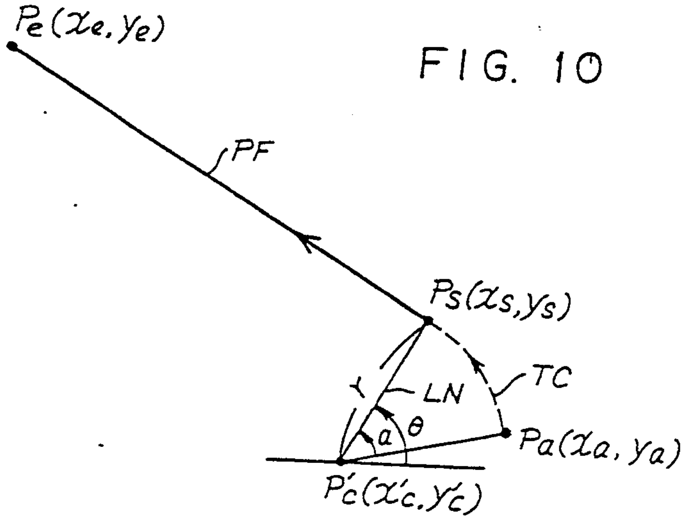


FIG. 11

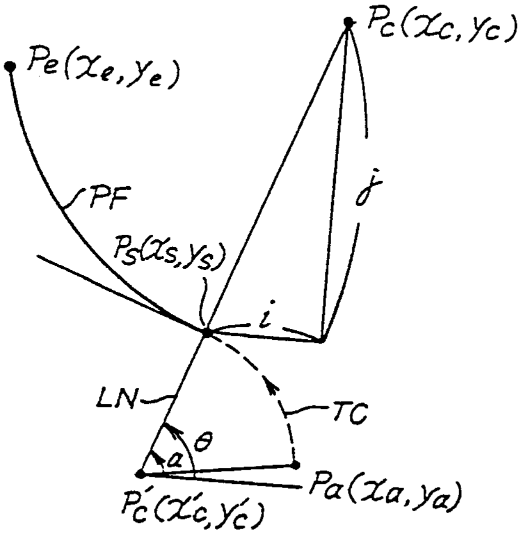


FIG. 12

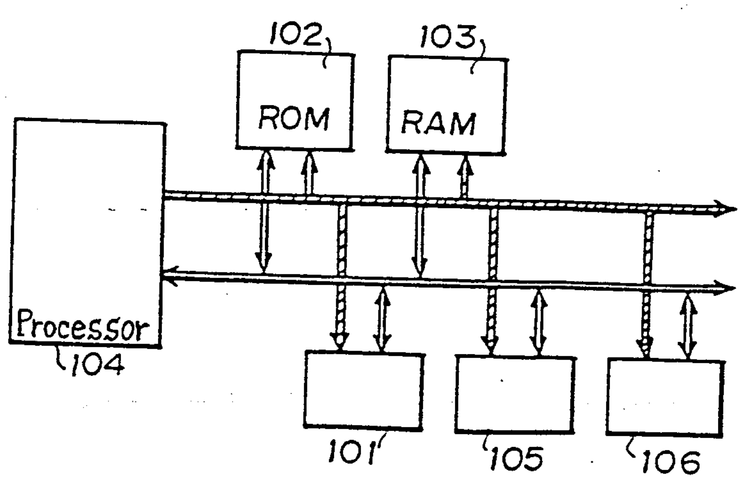

FIG. 13(A)

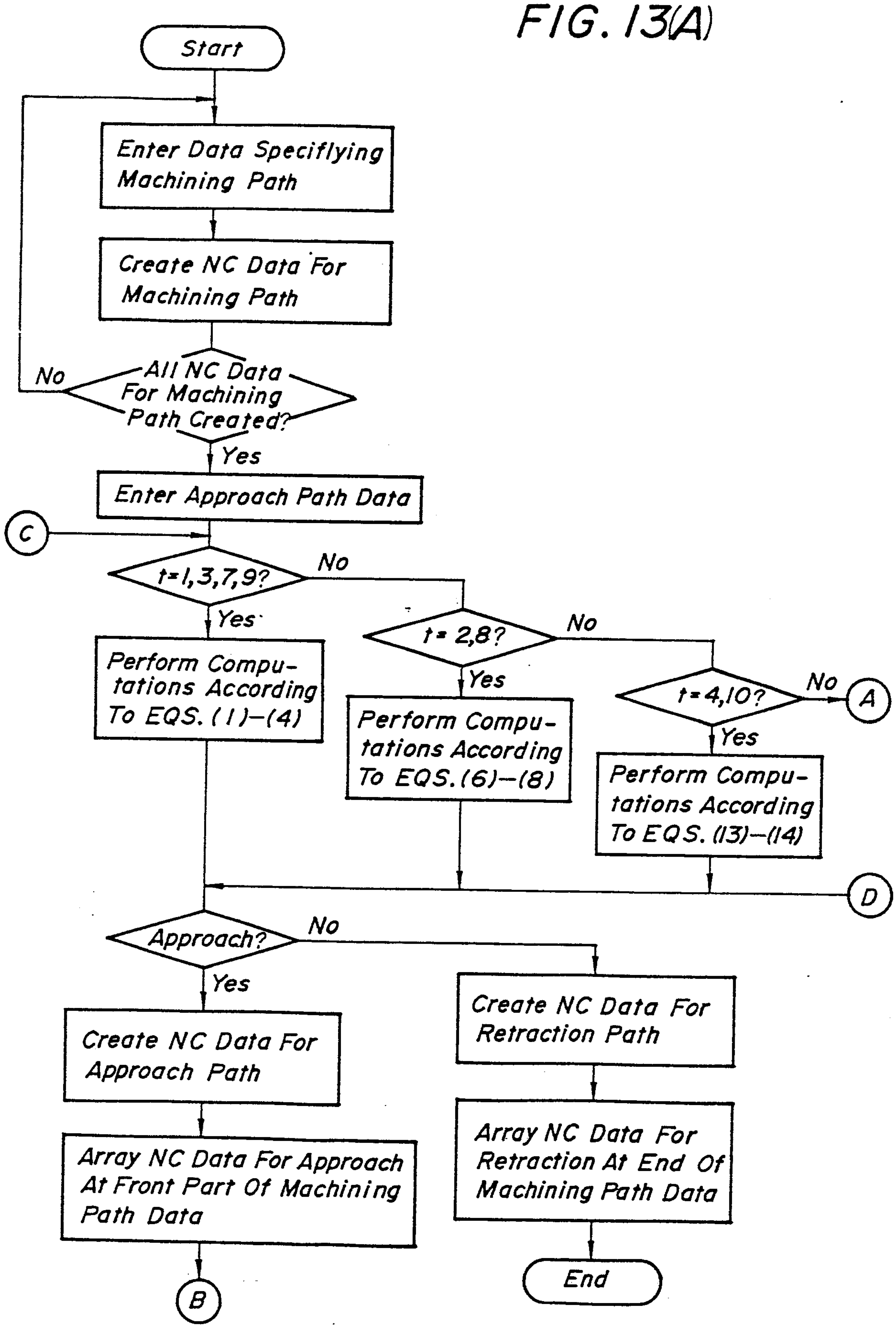

Start
Enter Data Specifiying Machining Path
Create NC Data For Machining Path
All NC Data For Machining Path Created?
No
Yes
Enter Approach Path Data
C
t=1,3,7,9?
No
Yes
Perform Computations According To EQS. (1)-(4)
t=2,8?
No
Yes
Perform Computations According To EQS. (6)-(8)
t=4,10?
No
A
Yes
Perform Computations According To EQS. (13)-(14)
D
Approach?
No
Yes
Create NC Data For Approach Path
Array NC Data For Approach At Front Part Of Machining Path Data
B
Create NC Data For Retraction Path
Array NC Data For Retraction At End Of Machining Path Data
End

FIG. 13(B)

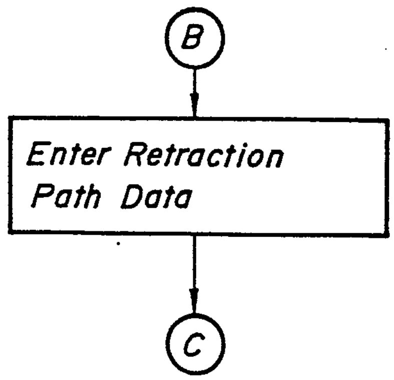


FIG. 13(C)

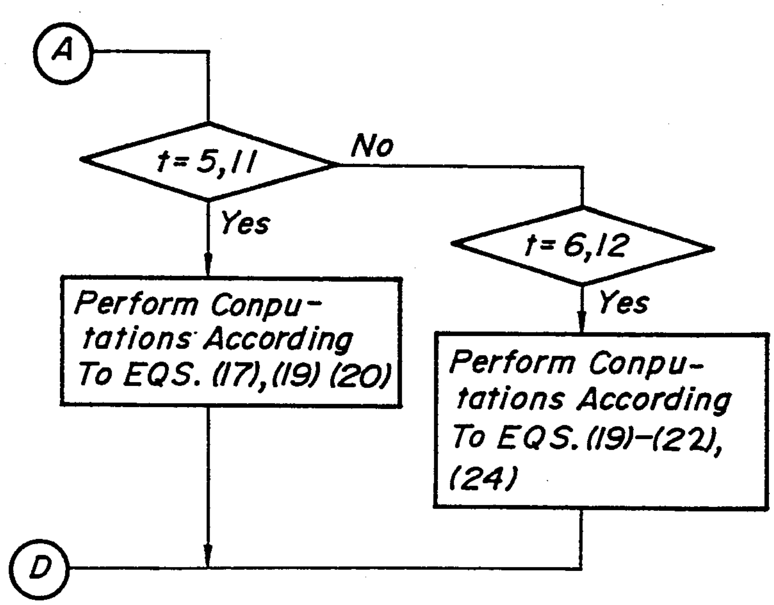

FIG. 14

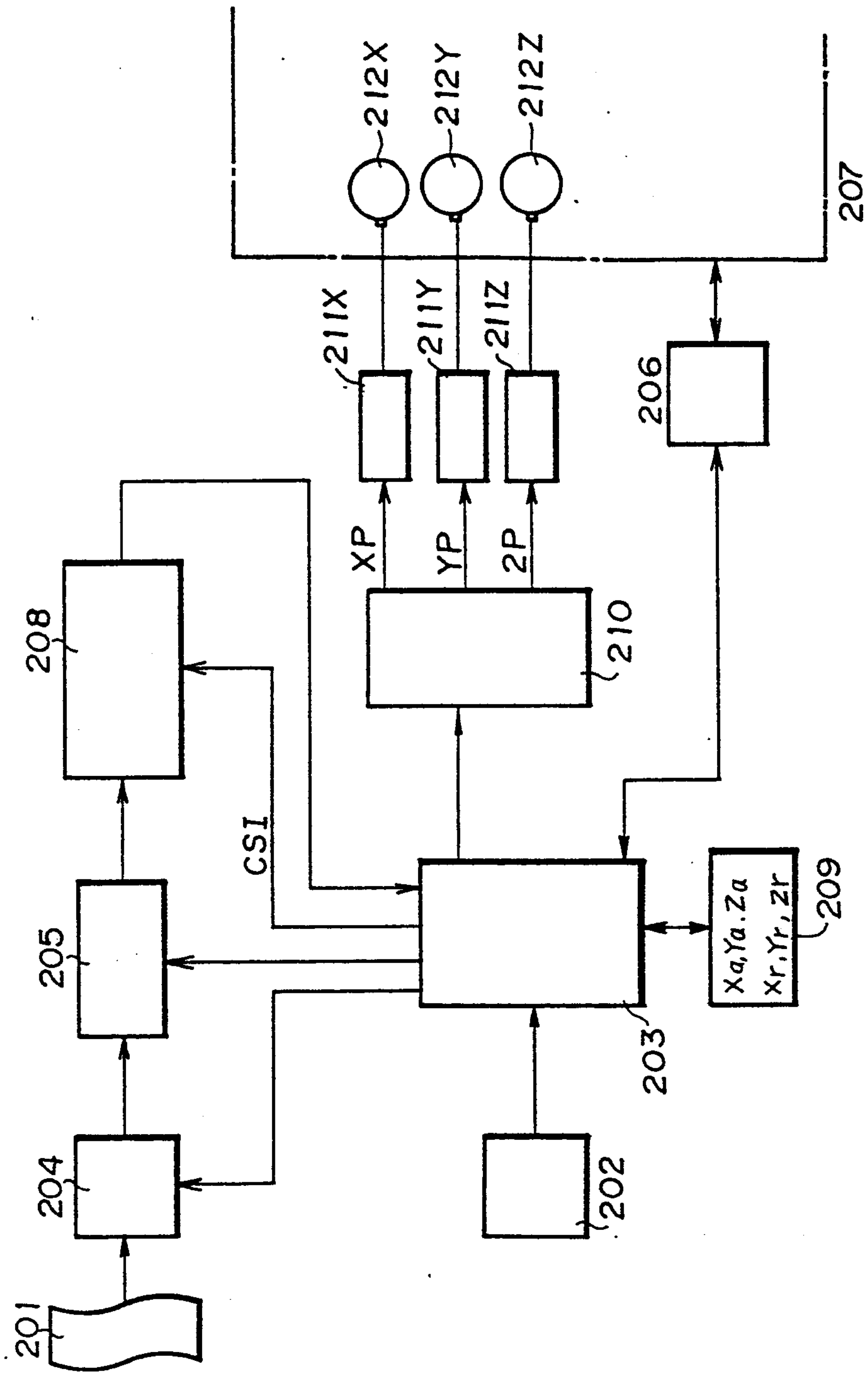
201
204
205
208
CSI
202
203
209
Xa,Ya.Za
Xr,Yr,zr
210
XP
YP
ZP
211X
211Y
211Z
212X
212Y
212Z
206
207

# INTERNATIONAL SEARCH REPORT

0139009

International Application No. PCT/JP84/00044

**I. CLASSIFICATION OF SUBJECT MATTER** (if several classification symbols apply, indicate all) [3]

According to International Patent Classification (IPC) or to both National Classification and IPC

Int. $Cl^3$ B23Q 15/00, G05B 19/403

**II. FIELDS SEARCHED**

| Minimum Documentation Searched [4] | |
|---|---|
| Classification System | Classification Symbols |
| IPC | B23B 1/00, B23G 1/00, B23Q 15/00 - 15/28, 21/02, 33/00 - 35/00, G05B 19/403 |

Documentation Searched other than Minimum Documentation to the Extent that such Documents are Included in the Fields Searched [5]

| | |
|---|---|
| Jitsuyo Shinan Koho | 1961 - 1984 |
| Kokai Jitsuyo Shinan Koho | 1971 - 1984 |

**III. DOCUMENTS CONSIDERED TO BE RELEVANT** [14]

| Category* | Citation of Document, [16] with indication, where appropriate, of the relevant passages [17] | Relevant to Claim No. [18] |
|---|---|---|
| Y | JP, A, 57-96752 (Daihatsu Motor Co., Ltd.), 16 June 1982 (16. 06. 82) | 1,2,5,6,7,10 |
| Y | JP, U, 57-105143 (Komatsu Ltd.), 29 June 1982 (29. 06. 82) | 1,2,5,6,7,10 |
| Y | JP, A, 57-205048 (Yamazaki Tekkosho), 16 December 1982 (16. 12. 82) | 2, 5, 7, 10 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search [2] | Date of Mailing of this International Search Report [2] |
|---|---|
| May 4, 1985 (04. 05. 85) | May 21, 1984 (21. 05. 84) |
| **International Searching Authority** [1] | **Signature of Authorized Officer** [20] |
| Japanese Patent Office | |